(19) **Europäisches Patentamt**
**European Patent Office**
**Office européen des brevets**

(11) **EP 3 089 305 A1**

(12) **EUROPEAN PATENT APPLICATION**

(43) Date of publication:
**02.11.2016 Bulletin 2016/44**

(51) Int Cl.:
**H02J 3/00** *(2006.01)*    **H02J 13/00** *(2006.01)*

(21) Application number: **15001281.3**

(22) Date of filing: **30.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **GridSystronic Energy GmbH
72461 Albstadt (DE)**

(72) Inventor: **Jägers, Stefan
72411 Bodelshausen (DE)**

(74) Representative: **Raible Deissler Lehmann
Patentanwälte PartG mbB
Senefelderstrasse 26
70176 Stuttgart (DE)**

(54) **ARRANGEMENT FOR OPERATING A SMART GRID**

(57)    The invention provides for an arrangement for operating a smart grid, a smart grid, and a method for operating this smart grid. The arrangement operates a smart grid comprising a number of machines, the arrangement comprises a control structure, the control structure being adapted for generating a schedule for sending requests to the machines by means of a simulation and in consideration of expectation values of the machines, for monitoring the energy flow achieved by switching of the machines in order to achieve a template illustrating the switching of the machines, and for comparing the generated schedule with the template.

Fig. 1

## Description

## Field of the invention

The present invention relates to an arrangement for operating a smart grid, a smart grid, and a method for operating a smart grid.

## Description of the related art

Energy grids or networks traditionally have relied on power grids which have predominantly been supplied with energy from fossil fuels and nuclear power using a central power generator. Many consumers are linked within an energy grid. In recent years, new energy devices, such as photovoltaic and block heat and power plant, have been introduced in houses enabling a decentralized energy system. Such power grids comprising a number of generators of different kind require new types of operators and methods for running the grid. Such grids are herein called smart grids.

Smart grids are modernized electrical grids using information and communications technology to gather and act on information such as information about the behavior of suppliers and consumers in an automated fashion to improve the efficiency, reliability, economics, and sustainability of the production and distribution of electricity.

A smart grid usually comprises a number of machines, e.g. generators and consumers. Energy generators or sources, providing energy for consumers and customers, respectively using or consuming the energy provided within the smart grid. Furthermore, the smart grid can comprise energy storages and transporters. All these machines and their behavior have to be considered when running the smart grid.

Main issues in such a smart grid are securing of energy supply for consumers and the satisfaction of the generators to ensure that a decentralized power supply system works adequately. Particularly, maintenance of reliable energy service over the grid requires grid operators ensuring that the production or generation of energy by generators on the grid is constantly balanced against the consumption of energy, e.g. electricity, on the grid.

US 8,457,802 B2 describes a system and method for energy management using a customer baseline usage of electricity using a predictive model based on simulation of energy assets based on business and usual of the customers. The method shown assists the customers in managing four types of energy assets, that is, generation, storage, usage, and controllable load assets. The customer is provided with information, options and operating schedules based on the algorithms herein, which allow the customer to maximize the economic return on his generation assets, his storage assets, and his load control assets. This process is referred to as optimization.

EP 2 830 184 A1 describes an energy management apparatus including a power generation estimation unit, a demand estimation unit, a creation unit, and a controller. The power generation estimation unit estimates a power generation amount of a power generation apparatus using renewable energy. The apparatus comprises a simulator configured to simulate, using a predetermined algorithm, an evaluated value of each operation schedule based on an extracted load pattern and the weight of the load pattern.

US 2013/0253898 A1 shows systems and methods for model-driven demand response for providing real-time modeling of an electrical power system for demand response. The document describes computer modeling and management of systems and computer simulation techniques with real-time system monitoring of micro grid health and performance.

EP 2 599 183 A1 shows a control system for a distributed power grid including a simulation module operative to directly interface with operational control of distributed energy resources to develop and modify control inputs of the distributed power grid.

EP 2 381 094 B1 describes a method for controlling an energy network including at least one intermittent energy source generating plant. The method comprises the steps of storing predetermined intermittent energy source generating plant state information, receiving intermittent energy source power generation information, determining possible intermittent energy source generating plant effects from such state and generation information, determining credible effects from such possible effects, and controlling the energy network in dependence upon such credible effects.

DE 10 2011 082 780 A1 shows a method and device for configuring a local energy network. The device is used for arranging a number of energy generating units and energy storing units within the local energy network so that this arrangement satisfies predetermined decision criteria.

## Summary of the invention

In contrast thereto, the invention proposes an arrangement for operating a smart grid according to claim 1, a smart grid according to claim 9, and a method according to claim 11.

The arrangement for operating a smart grid comprising a number of machines establishes an operator for running the smart grid and comprises a control structure. The control structure is adapted for generating a schedule for sending requests to the machines by means of a simulation and in consideration of expectation values of the machine.

Furthermore, the control structure can be adapted for providing a rank array considering the expectation values of the machine. This array that can be a two-dimensional or a three-dimensional array is used for generating the schedule.

Thus, the control structure can provide a rank array considering expectation values and expectation functions, respectively associated to the machines. Therefore, there can be an expectation function for each machine describing expectation values, especially prognosticated expectation values, of the associated machine.

On basis of the rank array, for example, the control structure generates a schedule with help of a simulation. This schedule represents a solution for achieving at least a rate of the expected energy demand within the considered time period. That means that the schedule comprises requests for all machines, namely for the generators and the consumers, for all intended time steps within the considered time period. The smart grid usually comprises generators and consumers. The arrangement described and the method illustrated are adapted to communicate with all machines, namely generators and consumers, or only with the generators or only with the consumers.

Furthermore, the control structure is adapted for monitoring the energy flow achieved by switching of the machines in order to achieve a template illustrating the switching of the machines, and for comparing the generated schedule with the template. Therefore, the control structure supervises the smart grid to monitor whether the machines follow their requests or not. This can be done by evaluation of replies of the machines to the requests, e.g. provided by the agents, or by directly controlling the energy flow within the smart grid. In this manner, the control structure gets a template comparable to the schedule comprising the actions of the machines, i.e. switching on and switching off. During operation, expectation values are computed for each machine expressing their wishes to get actual expectation values which can be compared with the prognosticated expectation values.

In case a machine does not follow its requests, this is noted by the control structure which in turn tries to compensate this action by sending new requests to at least one machine, e.g. considering the rank array, the prognosticated expectation values and/or the actual expectation values. On basis of the difference between prognosticated expectation values and actual expectation values and/or on basis of the difference between request and actual action of the machine, the reliability of each machine can be estimated. In doing this, external circumstances can be considered. This reliability can be taken into consideration when performing the simulation and generating the schedule.

The simulation can be performed with help of patterns, each pattern representing a protocol comprising an array of requests. During simulation, historical expectation functions and historical operating schedules are used. Furthermore, the probability of the machines following the requests is considered. The probability is dependent on the reliability of the machines. A historical operating schedule is a historical template showing the actions of the machines. In case the schedule is for a Monday, it might be suitable to take the historical operating schedule of a former Monday or even some historical operating schedules of some former Mondays.

In detail, the simulation for a considered time period can use the prognosticated expectation values and the prognosticated demands for the considered time period. The simulation can start with one pattern, then estimates the pattern and decides whether this pattern is sufficient, i.e. whether the demands can be fulfilled, at least a percentage rate of the demands. If not, a new pattern is generated and then evaluated.

In another embodiment, first of all a number of patterns is generated, each of them fulfilling requirements relating to the machines, as maximum or minimum runtime for example. Then, each pattern can be evaluated and afterwards the best pattern is selected. Alternatively, the patterns are evaluated successively, until one evaluated pattern fulfills the requirements and is selected. To fulfill the requirement means that the energy amount according to the demands can be provided or at least a rate of the amount can be provided for all time steps.

During simulation, the reliability of the machines can be considered. This reliability can already be considered in the prognosticated expectation functions. Furthermore, the reliability, i.e. the probability that the machine will follow, can be considered by examining the behavior of the machine in former time periods and/or in comparing historical prognosticated expectation functions with historical expectation functions. External circumstances can be considered.

Machines can be generators, consumers, storages or transporters. Generators can be new energy devices such as photovoltaic, wind generators, and block heat and power plant and even combined arrangements. Consumers can be water heating facilities, motors, climate controls, and electrolysis facilities. Storages can be batteries, rechargeable battery packs, and hot water cylinders. Transporters can be hot water pipes, power supply lines, and gas pipes. Even machines combining different machine types can be provided within the smart grid and can be operated by the arrangement described herein.

A machine can decide to switch on or to switch off. The request sent or provided by the control structure is subdominant. The want of the machine expressed by the expectation values is dominant.

The control structure is adapted to monitor the machines or the energy flow caused by the switching of the machines and can be adapted to detect generators not following the requests based on the schedule. In case a machine does not switch on in contrast to the schedule, the control structure selects another one under consideration of the rank array, for example. In case a machine switches on in contrast to the schedule the control structure selects a generator which might be already be switched on and sends this machine a request to switch off. In some cases the control structure computes a new schedule. Monitoring the machines results in an actual schedule or template which can be compared with the schedule generated by the scheduler. Result of this comparison can be used for generating or updating historical data. The template comprises the actions of the machines, i.e. switching on and switching off.

Accordingly, the control structure does not switch the machines by itself, but sends requests to the machines which can follow this requests or not. Therefore, the request is subdominant. The decision and action of the machines are dominant.

Expectation values of the machines express the wants of the machines and are dominant relating to the subdominant requests of the control structure. The expectation values generated for each machine express the preparedness for providing energy in case of an generator or for consuming energy in case of a consumer.

Furthermore, a number of agents associated to the number of machines and in connection with the control structure can be provided. These agents represents their associated machines.

In a centralized control structure, the agent communicates with its associated machine with help of a so-called box via a data line, e.g. Ethernet. The agent delivers the information for the control structure and the scheduler, respectively needed to generate a schedule. Moreover, the agent can record all information it receives from the associated machine via the box. In one embodiment, the agent computes the expectation values needed to generate the schedule. The agent can calculate prognosticated expectation values in advance for all time steps. Furthermore, the agent can calculate actual expectation values, in real-time for example, during operation.

For communication with the box, the agent can comprise an interpreter layer, transforming data in a format, e.g. machine language, which is understandable for the machine.

According to one embodiment, the control of the energy flow is performed with help of a fuzzy logic using the expectation values as input values. Fuzzy logic is a many-valued logic dealing with approximate, rather than fixed and exact reasoning. Fuzzy logic variables may have a truth value that ranges in degree between 0 and 1. According to the invention, the truth value represented by the expectation value of the generators ranges in degree between -1 and +1, for example. Therefore, fuzzy logic handles the concept of partial truth, where the truth value may range between completely true and completely false. Values in between expressing a probability or willingness can be handled by the fuzzy logic.

According to one aspect of the invention, each machine has a typical course of activity caused by local requirements and conditions. Therefore, a need for providing or consuming energy can be determined, e.g. for one day, typically the next day. This need or want for providing energy can be expressed by an expectation value which can also be called emotional value. This expectation value represents the wish of the machine to be switched on or off to provide or to consume energy or not. The control structure receives the expectation values of the machines within the smart grid typically for one day in time steps of one minute. Different periods and time steps are also possible. That means that each machine is associated to an expectation function having a course comprising all expectation values in the agreed period.

It is to be noted that there are prognosticated expectation functions computed in advance on basis of information related to the corresponding machine. During operation, actual expectation values and therefore, an actual expectation function is generated or computed expressing the actual wants and demands of the associated machine, quasi in real-time. The difference between prognosticated and actual expectation function is a measure for reliability of the machine. External circumstances the machine is not responsible for and causing a difference between prognosticated and actual expectation function can be considered when estimating the reliability.

According to one aspect of the invention, the expectation value E is defined as follows:

$$E = \text{low, e.g. -1}$$

The machine cannot be switched on, i. e. the machine will not switch on independent of the request received by the control source. A switched off generator is a generator not providing energy. A switched off consumer is a consumer not consuming energy.

$$E = \text{medium, e.g. 0}$$

The machine does not care. It can be switched on or not. Receiving a request to switch on the machine presumably will result in switching on.

$$E = \text{high, e.g. +1}$$

The machine wants to be switched on and will switch on independent of the request sent by the control structure. A switched on generator is a generator providing energy. A switched on consumer is a consumer consuming energy.

Steps or stages between the named values -1, 0 and +1, like -0,9. -0,8, -0,7, -0,6, -0,5, -0,4, -0,3. -0,2, -0,1, 0,1, 0,2, 0,3, 0,4, 0,5, 0,6, 0,7, 0,8 and 0,9 are possible values of E expressing the wants of the machine and the probability of the action. Values in between are also possible.

The expectation value of 0,9 means that the machine is more willing to switch on as a machine having an expectation value of 0,8 or less. The expectation value of -0,9 means that the corresponding machine is more willing to switch off as a machine having an expectation value of -0,8 or greater. The advantage is that the control structure receives expectation values and expectation functions, respectively, comprising these expectation values giving the control structure an indication of the probable behavior of the machine independent of the type or class of the machine. Therefore, all machines can be treated in a similar manner independent of their type.

On basis of these indications, a schedule is generated considering the indications, typically a rank array respecting these indications expressed by the expectation values. The machines decide by their own to switch on or switch off. In one embodiment, the control structure can give reason to follow by offering good conditions.

The expectation values can be computed on basis of physical conditions and further demands or wants of the machine. The expectation values and the expectation function, respectively can be computed by the agent, the box forming the interface or the machine itself.

Furthermore, the control structure can be implemented within one control center forming a central control structure. In this embodiment, the central control structure communicates with the machines by boxes forming interfaces associated to the generators.

Alternatively, the control structure is implemented by a decentralized control structure. In this embodiment, the control structure is shared by the generators, that means that each machine comprises a part of the control structure. Therefore, this embodiment uses a kind of swarm intelligence.

In one embodiment, the control structure comprises a scheduler for generating the schedule, e.g. with help of a rank array generated by the scheduler. In another embodiment, the control structure comprises a realization unit for sending the requests to the machines and for monitoring the machines. Consequently, the realization unit is adapted for monitoring the energy flow achieved by switching of the machines in order to achieve a template illustrating the switching of the machines, and for comparing the generated schedule with the template.

The scheduler uses the rank array considering the expectation functions of the machines as internal values and an external demand map representing the energy demand for the agreed period in time steps and generates a schedule forming the basis for the requests sent by the realization unit to the machines to switch on or to switch off. The machine can act according to the requests or not. In case a machine does not follow the request, this is recognized by the realization unit, then sending further requests to at least one further machine for compensation.

The requests can be sent in real time or in advance. In case a request is sent in advance, the machine can provide information relating to its willingness to follow or not.

Furthermore, the simulation can be performed on a rate basis that means that the simulation can define a schedule ensuring a rate of the wanted energy, e.g. 80%, 70%, 60%, 50% or even 110%, 120%, 130%. A simulation on a 80% rate seems to be a suitable approach in order to avoid over production, i.e. excess of energy in the smart grid.

Moreover, the invention proposes a smart grid comprising a number of machines and a control structure. The control structure is adapted for generating a schedule for sending requests to the machines by means of a simulation and in consideration of the expectation values, for monitoring the energy flow achieved by switching of the machines in order to achieve a template illustrating the switching of the machines, and for comparing the generated schedule with template. The template comprises the actions of the machines for each time step within the considered time period as the schedule. Thus, schedule and template can be compared easily assisted by a computing unit as part of the control structure and the realization unit, respectively.

Furthermore, the control unit can be adapted for providing a rank array considering dominant expectation values of the machines.

Thus, the control structure, which can be a centralized control center or a decentralized control structure is adapted to detect machines not following the requests based on the schedule. This is done, typically during operation, by comparison of template with schedule.

Therefore, the smart grid according to the invention comprises a number of machines and an arrangement for operating as described herein. The smart grid can comprise an arrangement for operating as defined in any of the claims 1 to 8 and throughout the description.

The smart grids described herein typically is an electrical grid using information and communications technology to gather and act on information such as information about the behavior of its generators and its consumers.

The smart grid can comprise at least one storage and/or at least one transporter. A storage is a battery, for example, for storing energy. A transporter is a means allowing for transporting of energy.

In one embodiment, the smart grid comprises a number of agents associated to the number of machines and in connection with the control structure. The agents represent the associated machines.

Furthermore, the invention provides for a method of operating a smart grid as described above using an arrangement as disclosed herein comprising the steps of providing a rank array considering expectation values of the generators, generating a schedule for sending requests to the generators considering the rank array by means of a simulation.

The method comprises the step of monitoring the energy flow caused by switching of the machines in order to achieve a template illustrating the switching of the machines, and for comparing the generated schedule with the template. This comparison helps to estimate reliability of the machines.

The schedule can be generated in consideration of historical data of the machines.

The simulation can be performed on a rate basis that means that the simulation can define a schedule ensuring a rate of the wanted energy, e.g. 80%, 70%, 60%, 50% or even 110%, 120%, 130%.

The simulation can use historical data, e.g. historical expectation functions and historical schedules to generate a schedule. Furthermore, data relating to the reliability of the machines can be used.

In one embodiment, the schedule is on minute basis. The schedule can respectively be generated for one day. Different time bases and periods are possible.

The control structure can be implemented in software running on a computing unit, e.g. a server. In case the control source is realized by a centralized control center, the software can run on a server associated to the control center. In this case, the agents associated to the machines can be installed on the server interacting with the machines by boxes.

In case the control source has a decentralized structure, each machine has a computing unit on which a software or a computer program can run. In that case the agents are placed at the associated machines. The computing units are interconnected to allow for interacting and communicating in order to establish the control structure.

In a decentralized structure all machines can be equivalent. Alternatively, a master slave structure defining one or more dominant machine(s) can be implemented.

The agents can be implemented in software, i. e. in computer programs. All computer programs described herein can comprise computer program means adapted for running on a computing unit for performing the methods as described herein and are aspects of the invention.

The invention further comprises a control structure, an agent, a machine, e.g. a generator or a consumer, being adapted to perform the method as described herein. Furthermore, the invention comprises methods and computer programs to perform the procedures, e.g. the Fill procedure or the Reschedule procedure, as described herein.

The Fill procedure that is also called Fill routine comprises the steps of recognizing that a machine has not followed the request, finding and selecting at least one machine using the rank array or the expectation values, particularly the actual expectation values, to compensate, and sending at least one request to the selected machine(s).

The Reschedule procedure that is also called Reschedule routine comprises the steps of recognizing that the schedule is not working because of too many machines not following and/or external circumstances, and generating a new schedule considering the rank array or the expectation values, particularly the actual expectation values.

Further features and embodiments of the invention will become apparent from the description and the accompanying drawings.

It will be understood that the features mentioned above and those described hereinafter can be used not only in the combinations specified, but also in other combinations or on their own, without departing from the scope of the present invention.

The invention is diagrammatically illustrated in the drawings by means of an embodiment by ways of example and is hereinafter explained in detail with reference to the drawings. It is understood that the description is in no way limiting on the scope of the present invention and is merely an illustration of a preferred embodiment of the invention.

Brief description of the drawings

In the drawings,

Figure 1     is a schematic total view of one embodiment of the method as described herein,

Figure 2     is a schedule generated by the scheduler and published by the realization unit as an output,

Figure 3     is a schedule as received by the realization unit,

Figure 4     is a chart showing generation of a rank array,

Figure 5     is a chart showing generating of expectation value and possible course of said value,

Figure 6     is an embodiment of the smart grid according to the invention,

Figure 7     is a possible simulation proceeding with help of a flow chart,

Figure 8     is a flow chart illustrating the simulation,

Figure 9     is a flow chart illustrating an operation of a scheduler,

Figure 10    is a flow chart illustrating an embodiment of the proposed method,

Figure 11    is a flow chart illustrating generation of a rank array.

**Detailed description**

The figures are described cohesively and in overlapping fashion, the same reference numerals denoting identical parts.

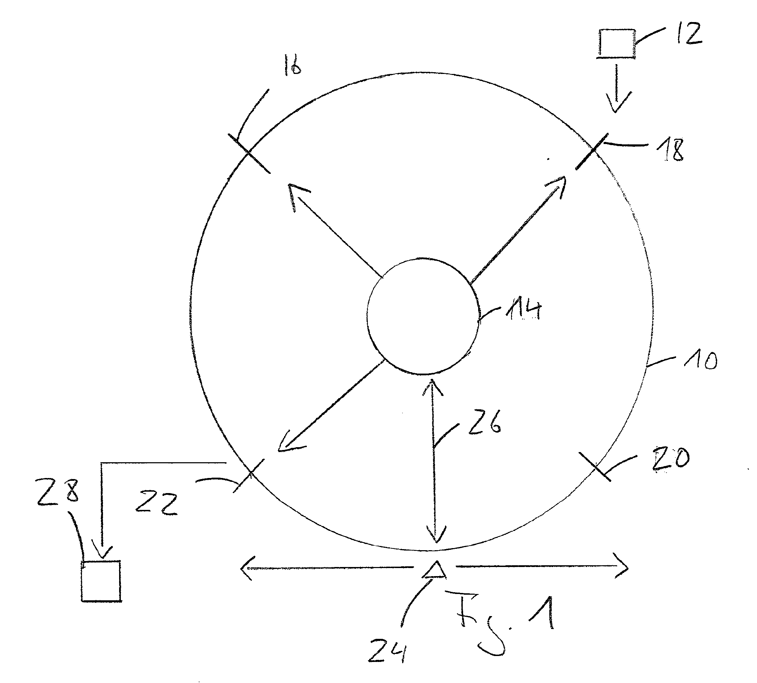

Figure 1 shows a schematic total view of one embodiment of the method as proposed illustrating a circuit 10 demonstrating different steps of the embodiment of the method according to the invention. The steps use external demands 12 as a demand map representing energy demands of the smart grid and internal demands as the expectation functions 14 of the machines. Thus, external and internal demands are considered when computing and generating the schedule. Furthermore, historical data of the machines and current information can be used.

In a first step 16, a rank array is generated, e. g. by the scheduler, considering the expectation functions 14. This rank array expresses the internal demands, i. e. the wants and demands of the machines.

In a second step 18, a scheduler generates a schedule using internal and external information. To verify the schedule a simulation is performed to ensure that the external demands can be fulfilled, at least a portion or rate, e.g. 80% of the demand, can be satisfied.

In a third step 20, a realization unit sends out requests to the machines based on the schedule. The machines receiving a request can follow this request or not. Therefore, the machines can switch on or switch off, e.g. on a minute-by-minute basis.

In a fourth step 22, the realization unit monitors the smart grid and the machines to record switching on and switching off performed by the machines. Thus, it is possible to generate a actual schedule which can be compared with the schedule generated in step 20 obtaining a deviation A 24. The result can be compared 26 with the expectation values 14. Furthermore, it is possible to predict this △ 24 by considering the expectation functions.

Finally, step 22 helps to generate and update historical data 28 which can be used in steps 16 and/or 18.

The steps above are merely numbered for illustration purposes. However, the method proposed can start at any point on the circle. As an adaptive method, the method can start at step 18 for example using default values for the rank array for generating the schedule.

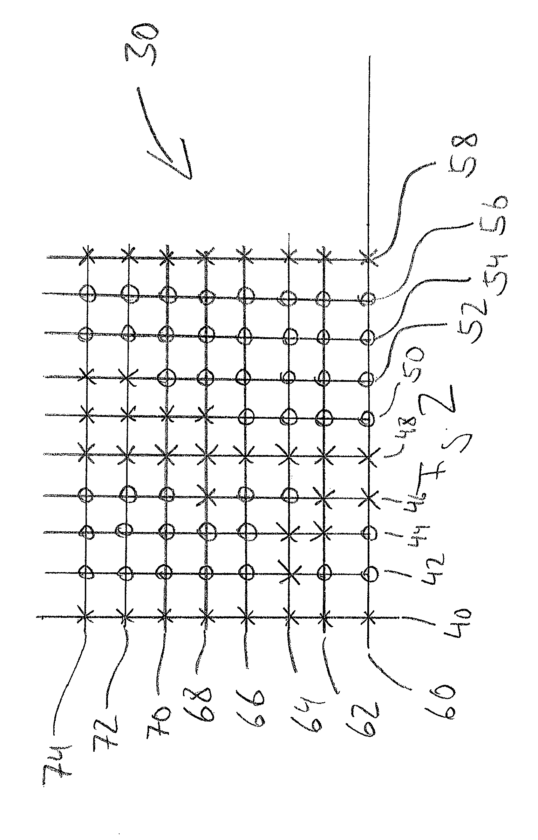

Figure 2 shows a schedule 30 generated by the scheduler and published by the realization unit as basis for the requests sent to the machines. The schedule shows the requests for ten machines 40, 42, 44, 46, 48, 50, 52, 54, 56, and 58 for eight time periods 60, 62, 64, 66, 68, 70, 72, and 74. A cross x represents the request for switching on, a circle 0 represents a requests for switching off. These requests are sent to the respective machines. The time period can be one minute. Different time periods are possible. The requests can be sent to boxes associated to the machines and forming interfaces.

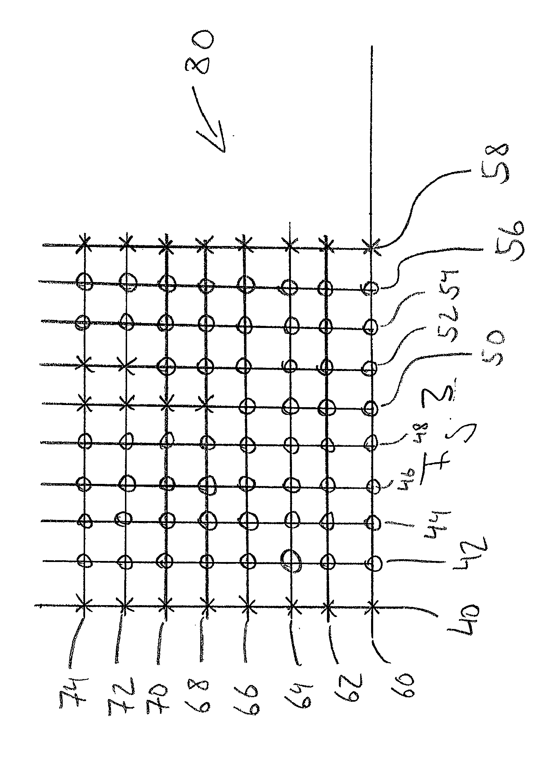

Figure 3 shows an actual schedule 80 as received by the realization unit, showing differences to schedule 30 in figure 2. Furthermore, the realization unit can receive data relating to the amount of power or energy which has been provided or consumed. A comparison performed by the realization unit shows that second machine 42 in third time period 64, third machine 44 in second and third time period 62 and 64, fourth machine 46 in first and second and fifth time period 60 and 62 and 68 and fifth machine 48 in all time periods do not follow the requests. In that case the realization unit attempts to compensate this deviation by sending new requests to machines considering the rank array and the expectation values. It might be necessary to generate a new schedule. The actual schedule 80 shown can further provide information to the amount of power of energy provided or consumes.

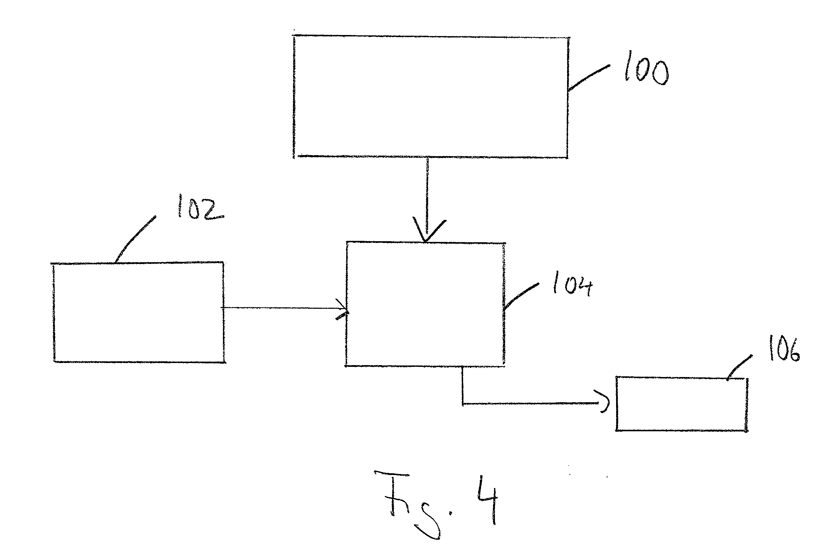

Figure 4 shows generation of a rank array using historical data 100, e.g. comprising former rank arrays and data relating to former behavior and reliability of generators. Furthermore, internal data 102, e.g. expectation functions 102 representing the wants and demands of the machines, is used to compute or generate a rank array 104 forming the basis for a schedule generated by the scheduler. This rank array 104 is considered when generating a schedule 106, particularly, a schedule 106 of requests.

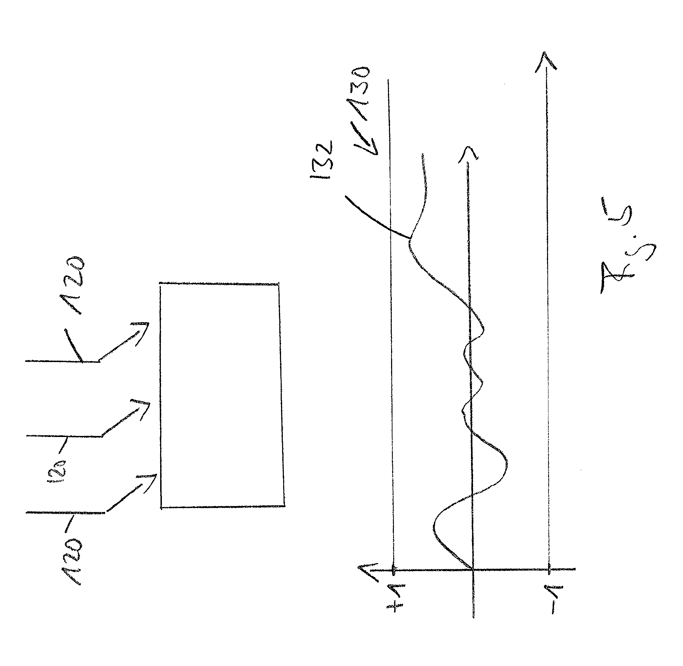

Figure 5 shows generating of expectation values and a possible course of said values as illustration of an expectation function. Input values 120 are data relating to the type of generator and data relating to environmental conditions, e.g. temperature.

A graph 130 shows the time dependent course 132 of the expectation value illustrating an expectation function. Values can be between -1 and +1, for example.

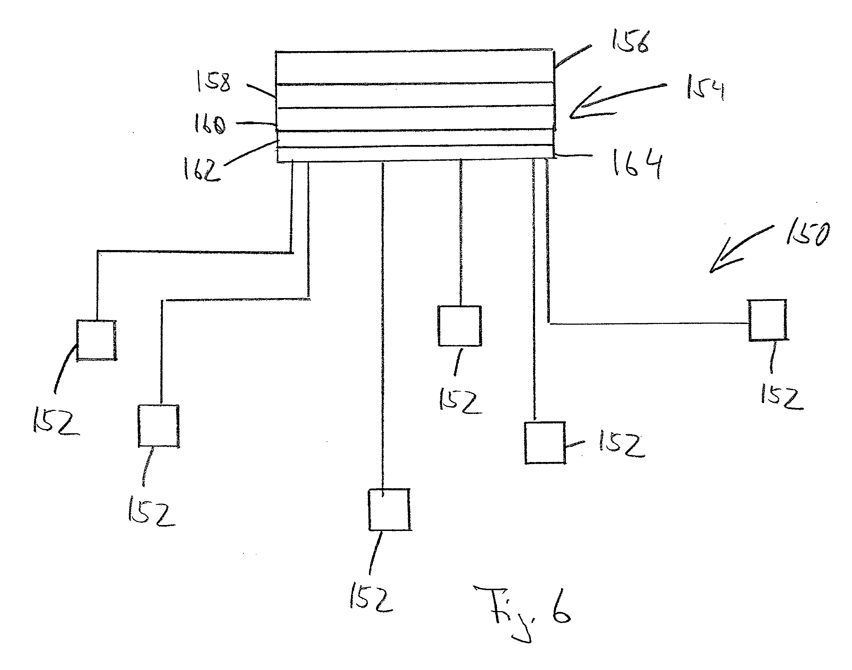

Figure 6 shows an embodiment of the smart grid according to the invention overall denoted with reference number 150. The smart grid 150 comprises a number of machines 152 connected to a central control 154 having a server 156, a layer for the scheduler 158, a layer for the realization unit 160, a layer for the agents 162, and a recorder layer 164 recording the behavior of the machines 152, i.e. the switching of the machines 152. Thus, figure 6 shows a centralized control structure being implemented in the central control 154.

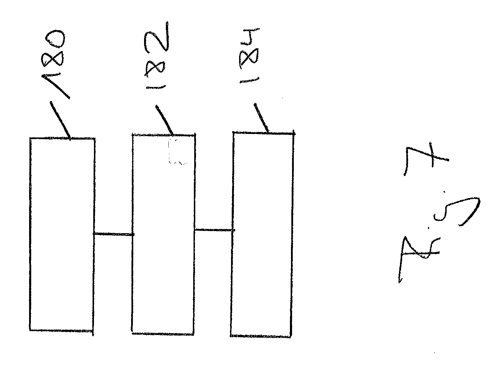

Figure 7 is a flow chart illustrating an embodiment of the simulation performed for generating the schedule by the control structure, e.g. the scheduler.

In a first step 180, a number of patterns is generated. Each pattern is an operating schedule for operating the smart grid for the considered time period divided in time steps. Each pattern can be a realistic operating schedule considering runtime requirements of the machines provided by the agents, for example.

In a second step, the patterns are evaluated successively until there is a pattern fulfilling the demands. This pattern is selected in a final step 184 and forms the basis for a schedule comprising the requests sent to the machines.

During simulation, it is to be evaluated whether the demands for energy consumption and/or energy production can be fulfilled. The demands and a demand template, respectively, can be determined with help of historical operating schedules and current information. The simulation using the rank array checks the ability of fulfilling the demands.

Furthermore, the reliability of the machines can be considered. This reliability can already be considered in the prognosticated expectation functions. Moreover, the reliability, i. e. the probability that the machine will follow, can be considered by examining the behavior of the machine in former time periods and/or in comparing historical prognosticated expectation functions with historical expectation functions. Additionally, external circumstances can be considered.

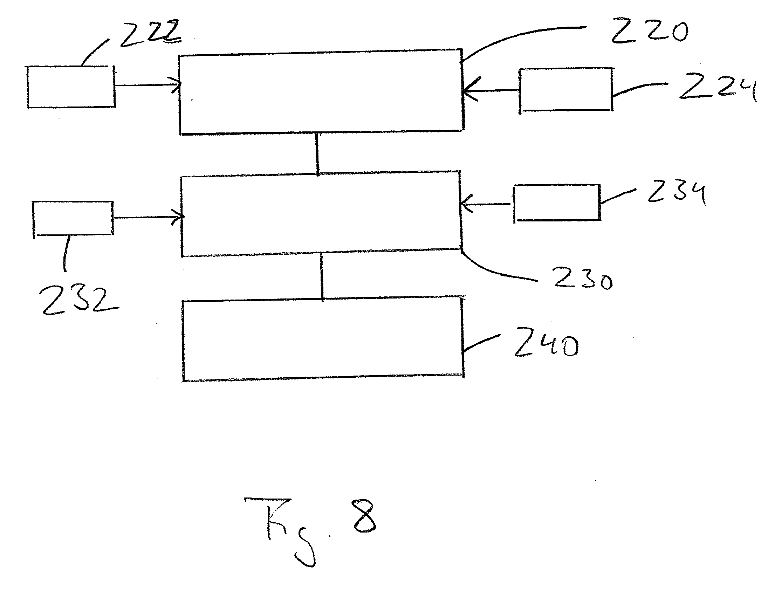

Figure 8 illustrates a possible simulation proceedings. In a first step 220, a number of patterns is generated. Each pattern represents a possible schedule of requests for running the smart grid. To reduce numbers of patterns external demands 222, e.g. demands regarding the machines, the circumstances and/or the demands relating to the energy to be provided or consumed, and a rank array 224 are considered. This rank array 224 can be a two-dimensional or a three-dimensional rank array. A two-dimensional rank array corresponds to a rank layer comprising ranks for the machines at the time steps. A three-dimensional rank array comprises a number of rank layers.

In a next step 230, the patterns generated in step 220 are evaluated considering external demands 232 like demands relating to the energy to be provided or consumed. A possible external demand could be "provide as much energy as possible". Furthermore, historical data 234 is considered. Historical data 234 can be related to the reliability of the machines, historical data to circumstances etc. The patterns are evaluated in consideration of the information provided.

Finally, in step 240, one pattern is selected that can be the best fitting or the first pattern to fulfill the requirements, particularly, the external demands 232. This pattern forms the basis for the schedule used or corresponds to the schedule used.

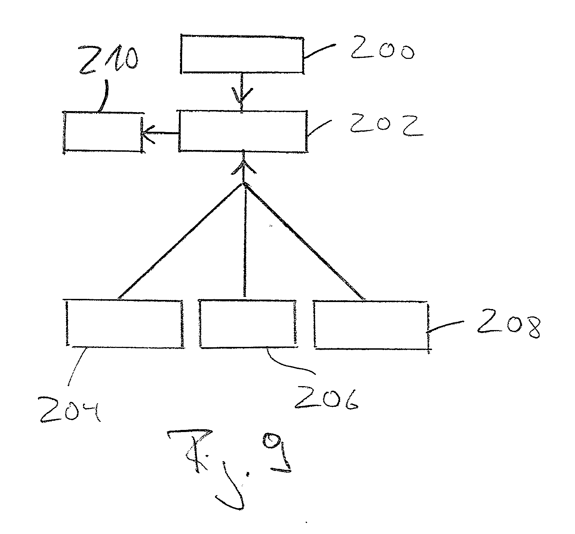

Figure 9 illustrates an operation of an embodiment of the schedule as a component of the control structure. This operation can be done by any suitable device within the control structure or by the control structure itself. In a first step 200 the scheduler provides the result to be achieved with the smart grid within the smart grid, e.g. defining the amount of energy to be produced or provided by the generators at the time steps within the considered time period. Additionally or alternatively, the amount of energy to be consumed by the consumers at the time steps within the considered time period is defined. In a particular embodiment, the amount of energy at the time steps within the considered time period is fixed and only the consumption of energy at the time steps within the time period is defined.

In a next step 202, the scheduler regards the expectation values 204, 206, 208 which can be "never switch on" 204, "it would be nice to switch on" 206, and "please switch on" 208. Historical data can be considered. At the end the scheduler generates a rank array 210 which is used in simulation.

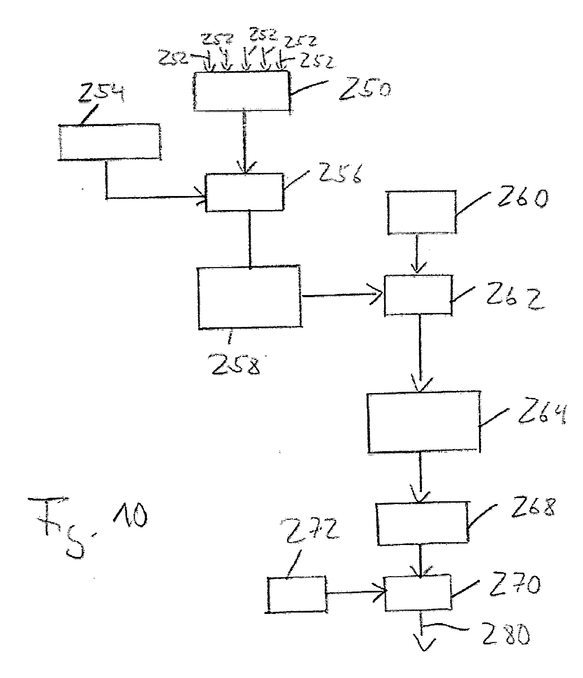

Figure 10 illustrates an embodiment of the proposed method. In a first step 250 expectation values 252 are provided by the agents of the machines. These expectation values 252 together with first external demands 254, e.g. regarding the types and conditions of the machines, are input in a rank unit 256 generating a rank array 258. This rank array considers the machines at all time steps within the agreed time period.

The rank array 258 and second external demands 260, e.g. regarding the demands regarding energy provision and consumption, are used in a simulation 262 to select a schedule 264 comprising the requests 268 to be sent to the machines. A recorder 270 within the control structure, e.g. within the realization unit, compares the requests 268 with responses 272 and records 280 these responses and the differences between requests 268 and responses 272.

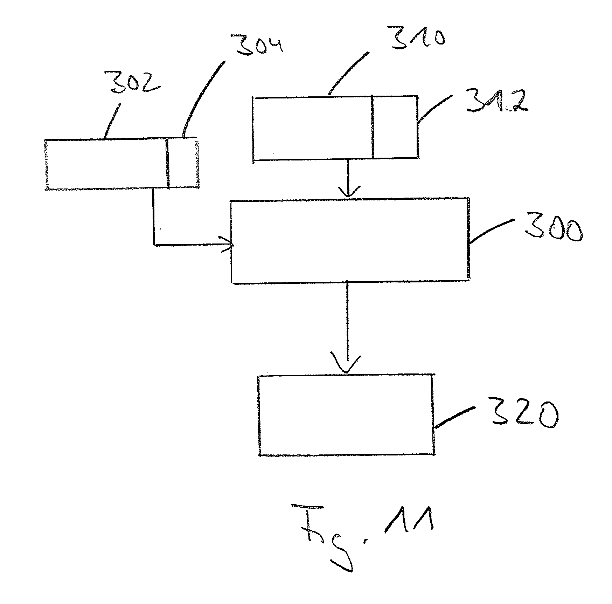

Figure 11 illustrates generation of an rank array using a rank unit 300. Expectation values 302 comprising fuzzy values 304 of these expectation values 302 and external demands 310 also comprising fuzzy values 312 are input in the rank unit 300. In this embodiment, the result is a three-dimensional rank array 320 considering the fuzziness of the input data.

Thus, a two-dimensional rank array comprises a data set to machines and time steps for one time period. A three-dimensional rank array comprises a number of data sets to the machines and time step for one time period. Therefore, the fuzziness of circumstances and behavior of the machines, e.g. expressed by historical data, can be considered.

In one embodiment, the scheduler sends special offers to the machines to try to influence their decisions, e.g. a special offer regarding the price for energy to be consumed or to be provided.

Furthermore, the scheduler can send a request connected with an amount of energy to be consumed or provided, i. e. the scheduler can send requests to a machine defining in time steps the amount of energy to be consumed or to be provided. Additionally, the expectation values associated with the machines can consider amounts of energy. For example, in time step n generator can have an expectation value of 0,5 for 20 kW and an expectation value of 0,3 for 40 kW. That means that in time step n the generator would prefer to provide 20 kW instead of 40 kW.

The arrangement for operating a smart grid and the method for operating the smart grid described herein propose a new approach to consider the wants of the members in this smart grid and to fulfill the demands. The arrangements provides a schedule comprising requests sent to the machines. However, these requests are subdominant. The machines are not committed to the requests, rather the machines can switch and provide or consume energy according to their wants.

As the willingness for providing or consuming energy by the machines is calculated in advance and communicated to the arrangement with help of expectation values, the chance for a working schedule is high.

In case one or more of the machines do not follow, a Fill routine helps to compensate this. In case of extensive changes in external circumstances and/or demands, the Reschedule routine helps to generate a new schedule suitable for the new situation.

**Claims**

1. Arrangement for operating a smart grid comprising a number of machines, the arrangement comprises a control structure, the control structure being adapted for generating a schedule for sending requests to the machines by means of a simulation and in consideration of expectation values of the machines, for monitoring the energy flow achieved by switching of the machines in order to achieve a template illustrating the switching of the machines, and for comparing the generated schedule with the template.

2. Arrangement according to claim 1, wherein the control structure is adapted for providing a rank array considering the expectation values of the machines used for generating the schedule.

3. Arrangement according to claim 1 or 2, wherein the control is performed with help of a fuzzy logic using the expectation values as input values.

4. Arrangement according to one of claims 1 to 3, comprising a number of agents associated to the number of machines and in connection with the control structure.

5. Arrangement according to one of claims 1 to 4, wherein the control is implemented within one control center forming a central control structure.

6. Arrangement according to one of claims 1 to 5, wherein the control structure comprises a scheduler for generating the schedule.

7. Arrangement according to one of claims 1 to 6, wherein the control center comprises a realization unit for sending requests to the machines, and for monitoring the energy flow achieved by switching of the machines in order to achieve a template illustrating the switching of the machines, and for comparing the generated schedule with the template.

8. Arrangement according to one of claims 1 to 7, wherein the simulation is performed on a rate basis.

9. Smart grid comprising

   - a number of machines,
   - a control structure,

the control structure being adapted for generating a schedule for sending requests to the machines by means of a simulation and in consideration of expectation values of the machines, and for monitoring the energy flow achieved by switching of the machines in order to achieve a template illustrating the switching of the machines, and for comparing the generated schedule with the template.

10. Smart grid according to claim 9, comprising a number of agents associated to the number of machines and in connection with the control structure.

11. Method for operating a smart grid according to claim 9 or 10 using an arrangement according to one of claims 1 to 8, comprising the steps of:

    - generating a schedule for sending requests to the machines by means of a simulation and in consideration of expectation values of the machines, and
    - monitoring the energy flow achieved by switching of the machines in order to achieve a template illustrating the switching of the machines, and for comparing the generated schedule with the template.

12. Method according to claim 11, comprising the step of providing a rank array considering the expectation values of the machines.

13. Method according to one claim 11 or 12, wherein an expectation function is generated for each machine.

14. Method according to one of claims 11 to 13, wherein the simulation is performed on a rate basis.

15. Method according to one of claims 11 to 14, wherein the simulation is performed with help of patterns each pattern representing a protocol comprising an array of requests.

FIG. 1

100

106

104

102

Fig. 4

120

120

120

132

130

Fig. 5

+1

-1

Fig. 6

Fig 7

Fig. 8

210

200

202

208

204

206

Fig. 9

Fig. 10

Fig. 11

Europäisches
Patentamt

European
Patent Office

Office européen
des brevets

# EUROPEAN SEARCH REPORT

Application Number

EP 15 00 1281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/379139 A1 (DEMPSTER IAN [US]) 25 December 2014 (2014-12-25) * column 0026 - column 0030; figure 1 * | 1-15 | INV. H02J3/00 H02J13/00 |
| X,D | US 2013/253898 A1 (MEAGHER KEVIN [US] ET AL) 26 September 2013 (2013-09-26) * paragraph [0253] - paragraph [0256]; figure 23 * | 1-15 | |
| A | EP 2 648 142 A1 (ACCENTURE GLOBAL SERVICES LTD [IE]) 9 October 2013 (2013-10-09) * paragraph [0090]; figure 13 * | 1-15 | |
| A,D | EP 2 830 184 A1 (TOSHIBA KK [JP]) 28 January 2015 (2015-01-28) * paragraph [0022] - paragraph [0029]; figure 5 * | 1-15 | |

TECHNICAL FIELDS SEARCHED (IPC)

H02J

The present search report has been drawn up for all claims

| Place of search | Date of completion of the search | Examiner |
|---|---|---|
| Munich | 16 October 2015 | Lindquist, Jim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 00 1281

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2015

| Patent document cited in search report | | Publication date | Patent family member(s) | | Publication date |
|---|---|---|---|---|---|
| US 2014379139 | A1 | 25-12-2014 | NONE | | |
| US 2013253898 | A1 | 26-09-2013 | NONE | | |
| EP 2648142 | A1 | 09-10-2013 | EP | 2648142 A1 | 09-10-2013 |
| | | | US | 2013262197 A1 | 03-10-2013 |
| EP 2830184 | A1 | 28-01-2015 | EP | 2830184 A1 | 28-01-2015 |
| | | | JP | 2013198360 A | 30-09-2013 |
| | | | WO | 2013141039 A1 | 26-09-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8457802 B2
- EP 2830184 A1
- US 20130253898 A1
- EP 2599183 A1
- EP 2381094 B1
- DE 102011082780 A1